# EUROPEAN PATENT APPLICATION

(11) **EP 3 623 907 A1**
(43) Date of publication of application: **18.03.2020**
(21) Application number: 19197071.4
(22) Date of filing: 12.09.2019
(51) Int. Cl.: G06F 1/3206, G06K 19/073, G06K 19/077

(54) **ELECTRONIC LABELS**

(30) Priority: 17.09.2018 GB 201815086
(71) Applicant: Relco UK Limited, Watford WD24 4JP (GB)
(72) Inventor: GILL, Mark, Watford, WD24 4JP (GB)
(74) Representative: Serjeants LLP

(57) **Abstract**

A label strip 10 comprises a plurality of electronic labels 12. Each electronic label 12 comprises a power source 14, electronic control circuitry 16, and a sensor 18 which is controllable by the electronic control circuitry 16. Each electronic label 12 is separable from the label strip 10 and the sensor 18 is inactive prior to separation of an electronic label 12 from the label strip 10.

## Description

### Technical Field

The present disclosure relates to generally to electronic labels. More particularly, embodiments of the present disclosure relate to a label strip comprising a plurality of electronic labels and/or to a method for activating an electronic label.

### Technical Background

Electronic labels, also known as smart labels and smart tags, can be used for a variety of purposes including the logistics and transportation of items and can detect a range of events such as shock, tilt, vibration and overheating, which may, for example, damage an item being stored or transported. Electronic labels can comprise one or more sensors of the required type to detect the event(s) of interest and can indicate what is happening in real-time and/or store a digital record of events.

Embodiments of the present disclosure seek generally to provide improvements in the field of electronic labels.

### Summary of the Disclosure

According to a first aspect of the present disclosure, there is provided a label strip comprising a plurality of electronic labels each comprising a power source, electronic control circuitry, and a sensor controllable by the electronic control circuitry, wherein each electronic label is separable from the label strip and the sensor is inactive prior to separation of an electronic label from the label strip.

According to a second aspect of the present disclosure, there is provided a method for activating an electronic label, the method comprising separating an electronic label from a label strip comprising a plurality of electronic labels each comprising a power source, electronic control circuitry and a sensor controllable by the electronic control circuitry, wherein separation of an electronic label from the label strip permits activation of the sensor by the electronic control circuitry.

The electronic control circuitry may be adapted to maintain the sensor in an inactive state prior to separation of an electronic label from the label strip. The electronic control circuitry may be adapted to activate the sensor, e.g. by switching the sensor to an active state, upon, or following, separation of an electronic label from the label strip.

Separation of an electronic label from the label strip separates the electronic label from an adjacent electronic label remaining in the label strip.

Maintaining the sensor in an inactive state prior to separation of an electronic label from the label strip and, thus activating the sensor by the electronic control circuitry only upon, or following, separation of an electronic label from the label strip preserves the life of the power source when the electronic label is part of the label strip and thereby maximises the useful life of the power source and, hence, of the electronic label after separation from the label strip. Activation of the sensor is also assured by the simple action of separating an electronic label from the label strip without having to rely on manual activation by a user, for example via a push button, at the time of applying the electronic label to an item, thereby eliminating the possibility that the electronic label is not activated due to user error.

The electronic control circuitry may be adapted to activate the sensor by permitting power to be supplied from the power source to the sensor, for example upon, or following, separation of an electronic label from the label strip. The useful life of the power source is thereby maximised as discussed above.

Each electronic label may be in electrical continuity with at least one adjacent electronic label prior to separation from the label strip. The electrical continuity may be arranged to maintain the sensor in the inactive state. The electrical continuity between adjacent electronic labels may be provided by an electrical connection between the electronic control circuitry of adjacent electronic labels. The electrical connection may be provided by an electrically conductive strip, e.g. an activation strip, which may connect the electronic control circuitry of adjacent electronic labels. The use of an electrically conductive strip provides a convenient but effective way to ensure the required electrical continuity between adjacent electronic labels.

In one embodiment, the electrical continuity may be adapted to maintain the electronic control circuitry in an inactive state. With this arrangement, the electronic control circuitry is inactive prior to separation of an electronic label from the label strip and, thus, the electronic label is in a completely dormant or sleep state. The useful life of the power source is, thus, further enhanced. The break in electrical continuity occurring upon separation of an electronic label from the label strip causes the electronic control circuitry to adopt an active state in which the sensor is activated by the electronic control circuitry. In this embodiment, the electronic label wakes up from the dormant or sleep state upon separation from the label strip. In the method according to the second aspect, separation of the electronic label from the label strip may break an electrical continuity with an adjacent electronic label and activation of the sensor by the electronic control circuitry may occur in response to a detected break in the electrical continuity.

In another embodiment, the electronic control circuitry may be adapted to periodically determine the status of the electrical continuity with an adjacent electronic label. With this arrangement, the sensor is not necessarily activated by the electronic control circuitry upon separation of an electronic label from the label strip. Instead, the sensor may be activated by the electronic control circuitry after separation of an electronic label from the label strip when the break in electric continuity is detected by the electronic control circuitry. The electronic control circuitry may operate in a polling mode to periodically determine the status of the electrical continuity with an adjacent electronic label.

The electronic control circuitry may be adapted to activate the sensor in response to a detected change in an electrical characteristic, e.g. above a predetermined threshold, between adjacent electronic labels. The change in the electrical characteristic occurs upon separation of an electronic label from the label strip. With this arrangement, the sensor remains inactive unless a change in the electrical characteristic is detected, in other words whilst the electronic label is attached to the label strip, thereby ensuring that the useful life of the power source is maximised.

In one embodiment, the electronic control circuitry may be adapted to detect the change in the electrical characteristic upon separation of an electronic label from the label strip. With this arrangement, the change in the electrical characteristic that is detected upon separation of an electronic label from the label strip activates the sensor by the electronic control circuitry, in other words causes the electronic label to wake up from the dormant or sleep state. In the method according to the second aspect, separation of the electronic label from the label strip may cause a change in an electrical characteristic between the separated electronic label and an adjacent electronic label and activation of the sensor by the electronic control circuitry may occur in response to a detected change in the electrical characteristic, for example above a predetermined threshold.

In another embodiment, the electronic control circuitry may be adapted to detect the change in the electrical characteristic following separation of an electronic label from the label strip. With this arrangement, the sensor is not necessarily activated by the electronic control circuitry upon separation of an electronic label from the label strip. Instead, the sensor may be activated by the electronic control circuitry after separation of an electronic label from the label strip when the change in the electrical characteristic, e.g. above a predetermined threshold, is detected by the electronic control circuitry. The electronic control circuitry may operate in a polling mode to periodically determine whether there has been a change in the electrical characteristic, for example above a predetermined threshold.

The change in the electrical characteristic may be a change in capacitance and/or resistance and/or inductance.

The label strip may include a plurality of separation lines, and one of said separation lines may be provided between adjacent electronic labels to allow the electronic labels to be individually separated from the label strip. The electronic labels can, thus, be easily separated from adjacent electronic labels and from the label strip. By way of nonlimiting example, the separation lines may comprise perforated lines or laser score lines.

Each electronic label may comprise an adhesive layer which may permit the electronic labels to be individually adhered to an item following separation from the label strip.

Each electronic label may comprise a plurality of said sensors which may be controllable by the electronic control circuitry. The or each sensor may be selected from the group consisting of an accelerometer, a temperature sensor such as a thermistor or a resistance temperature detector (RTD), a humidity sensor and an ultraviolet light sensor. Depending on the type(s) of sensor with which the electronic label is equipped, the electronic label may be capable of detecting a range of events including shock, vibration, tilt/tip, high or low temperatures, high or low humidity and exposure to ultraviolet light, all of which may adversely affect, or cause damage to, an item being stored or transported. It will be understood by one of ordinary skill in the art that the aforesaid list of sensor types is not exhaustive and that the electronic label could be equipped with other types of sensor depending on the nature of the event(s) that need to be detected.

Each electronic label may include a status indicator, for example a light emitting diode (LED), to indicate the status of the electronic label. The status indicator may be controllable by the electronic control circuitry. The status indicator may indicate whether the electronic label is in an active state and/or an inactive state. For example, the status indicator may be illuminated when the electronic label is in the active state. The provision of a status indicator allows a user to easily identify the status of an electronic label and in particular to verify that an electronic label has been properly activated following separation from the label strip.

The electronic label may be adapted to store and/or transmit and/or receive data, for example by the electronic control circuitry. For example, the electronic label may be adapted to store and/or transmit data relating to one or more events detected by the sensor and/or data relating to the status of the electronic label and/or data relating to the location of the electronic label.

The electronic label may be arranged to provide for monitoring of items during transit and may be arranged to indicate whether an item being transported has been subjected to an event which may have caused damage to the item.

The electronic label may be arranged to provide for monitoring of items during storage or use by an end user. For example, the electronic label may be attached, in use, to an item, such as a pharmaceutical product or food product or beverage product, which needs to be stored in a refrigerator. In embodiments in which the sensor is a temperature sensor, the electronic label may be arranged to alert an end user that an item has not been returned to a refrigerator after use, for example by transmitting data based on one or more temperature measurements by the temperature sensor, to a suitable a software application on a remote device such as a tablet computer or a smartphone. The electronic label may be arranged to alert an end user that an item has not been removed from a refrigerator at an expected time by determining via the temperature sensor that there has been no change in temperature at the expected time, for example by transmitting data to suitable a software application on a remote device such as a tablet computer or a smartphone. With this arrangement, the electronic label could be attached to a pharmaceutical product to provide a reminder to the end user that they need to administer the pharmaceutical product at predetermined time intervals.

### Brief Description of the Drawings

Figure 1 is a diagrammatic plan view of part of a label strip comprising a plurality of electronic labels; and
Figure 2 is a diagrammatic view of part of an electronic label after separation from the label strip shown in Figure 1.

### Detailed Description of Embodiments

Embodiments of the present disclosure will now be described by way of example only and with reference to the accompanying drawings.

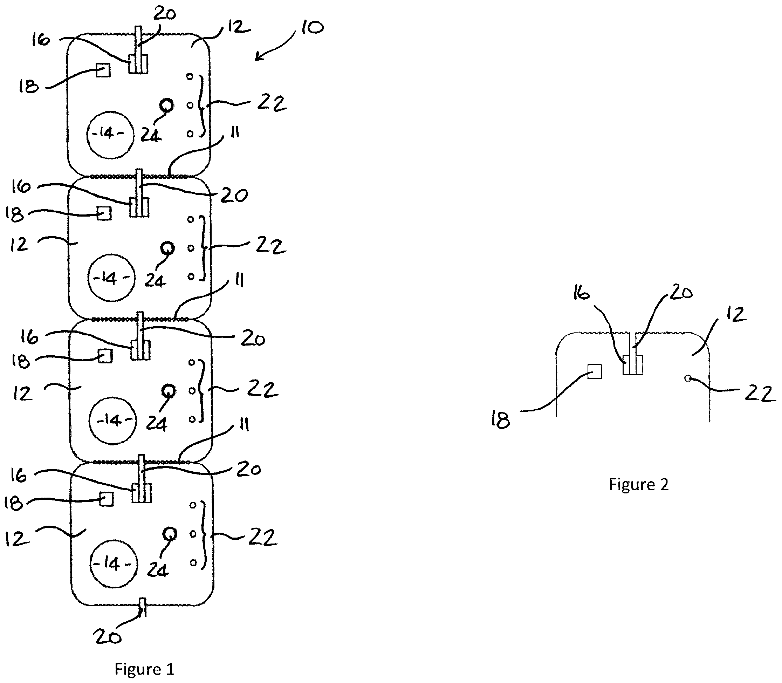

Referring to Figure 1, there is shown a label strip 10 comprising a plurality of electronic labels 12. The electronic labels 12 may be formed of a flexible strip of printed circuit board material and, thus, although the label strip 10 is depicted in an unwound state, it may be wound to form a reel of electronic labels 12 and may typically comprise a large number of electronic labels 12. The label strip 10 includes a plurality of separation lines 11, for example perforated lines, which enable the electronic labels 12 to be individually separated by tearing from the label strip 10. Each electronic label 12 also includes an adhesive layer (not shown) which allows the electronic label 12 to be adhered to an item after it has been separated from the label strip 10.

Each electronic label 12 comprises a power source 14, for example a coin cell battery, electronic control circuitry 16, for example a microprocessor, and a sensor 18 which is controllable by the electronic control circuitry 16. As explained earlier in this specification, the sensor 18 could comprise an accelerometer, a temperature sensor such as a thermistor or a resistance temperature detector (RTD), a humidity sensor or an ultraviolet light sensor. In some circumstances, each electronic label 12 could comprise one or more of these different types of sensor 18 depending on the type or types of event that need to be detected by the electronic label 12. It will be apparent to one of ordinary skill in the art that other types of sensor could be used depending on the nature of the events that need to be detected.

The electronic control circuitry 16 is adapted to activate the sensor 18 by permitting power to be supplied from the power source 14 to the sensor 18 only after an electronic label 12 has been separated from the label strip 10. Thus, it will be understood that prior to separation of an electronic label 12 from the label strip 10, the sensor 18 is inactive and does not consume any power, thereby preserving the life of the power source 14. Further, since activation of the sensor 18 is initiated automatically by the control circuitry 16 upon, or following, separation of an electronic label 12 from the label strip 10, activation of the sensor 18 is assured without any reliance on manual activation by a user.

In a first implementation illustrated in the drawings, an electrically conductive strip 20, or activation strip, connects adjacent electronic labels 12 when they form part of the label strip 10 as shown in Figure 1. The electrically conductive strip 20 maintains electrical continuity between adjacent electronic labels 12 by providing an electrical connection between the electronic control circuitry 16 of adjacent electronic labels 12. The electrical continuity provided by the electrically conductive strip 20 maintains the sensor 18 in an inactive state.

In a first embodiment of the first implementation, the electrical continuity maintains the electronic control circuitry 16 in an inactive state prior to separation of an electronic label 12 from the label strip 10. Thus, the electronic label 10 adopts a dormant or sleep state prior to separation from the label strip 10. A break in the electrical continuity that occurs upon separation of an electronic label 12 from the label strip 10 activates the sensor 18 by the electronic control circuitry 16. Thus, it will be understood in this embodiment that both the electronic control circuitry 16 and the sensor 18 are inactive prior to separation of an electronic label 12 from the label strip 10.

When an electronic label 12 is separated from the label strip 10 as shown in Figure 2, the electrically conductive strip 20 is simultaneously torn or broken thereby breaking the electrical connection, and hence the electrical continuity, between the separated electronic label 12 and the adjacent electronic label 12 remaining in the label strip 10. The act of breaking the electrical continuity activates the electronic control circuitry 16 of the separated electronic label 12, and thus the separated electronic label 12 wakes up from the sleep state upon being separated from the label strip 10. More particularly, breaking the electrical continuity causes the electronic control circuitry 16 to activate the sensor 18 so that it can detect events.

In a second embodiment of the first implementation, the electronic control circuitry 16 operates in a polling mode to periodically determine the status of the electrical continuity provided by the electrically conductive strip 20 both prior to, and following, separation of an electronic label 12 from the label strip 10. If the electronic control circuitry 16 determines that the electrical continuity is present (in other words that the electrically conductive strip 20 is intact), the electronic control circuitry 16 determines that the electronic label 12 has not been separated from the label strip 10 and the sensor 18 is not activated by the electronic control circuitry 16. On the other hand, if the electronic control circuitry 16 determines that the electrical continuity has been broken (in other words that the electrically conductive strip 20 has been torn or broken), the electronic control circuitry 16 determines that the electronic label 12 has been separated from the label strip 10 and the sensor 18 is activated by the electronic control circuitry 16 enabling it to detect any events that may occur.

In a second implementation, the electronic control circuitry 18 is adapted to activate the sensor 18 by detecting a change in an electrical characteristic, for example resistance, capacitance or inductance, above a predetermined threshold. The change in the electrical characteristic above the predetermined threshold occurs due to separation of an electronic label 12 from the label strip 10, and thus the sensor 18 can be reliably activated by detecting the change in the electrical characteristic either upon, or following, separation of an electronic label 12 from the label strip 10.

In a first embodiment of the second implementation, the electronic control circuitry 16 is adapted to detect a change in the electrical characteristic above a predetermined threshold upon separation of an electronic label 12 from the label strip 10. Thus, the electronic label 10 adopts a dormant or sleep state prior to separation from the label strip 10. The change in the electrical characteristic that occurs upon separation of an electronic label 12 from the label strip 10 activates the sensor 18 by the electronic control circuitry 16. Thus, it will be understood in this embodiment that both the electronic control circuitry 16 and the sensor 18 may be inactive prior to separation of an electronic label 12 from the label strip 10.

In a second embodiment of the second implementation, the electronic control circuitry 16 operates in a polling mode to periodically determine whether there has been any change in the electrical characteristic above a predetermined threshold. If the electronic control circuitry 16 determines that a change in the electrical characteristic has not occurred, the electronic control circuitry 16 determines that the electronic label 12 has not been separated from the label strip 10 and the sensor 18 is not activated by the electronic control circuitry 16. On the other hand, if the electronic control circuitry 16 determines that a change in the electrical characteristic has occurred above a predetermined threshold, the electronic control circuitry 16 determines that the electronic label 12 has been separated from the label strip 10 and the sensor 18 is activated by the electronic control circuitry 16 enabling it to detect any events that may occur.

The electronic labels 12 each include one or more status indicators 22, such as light emitting diodes, which indicate the status of the electronic labels 12. The status indicators may, for example, illuminate following separation of an electronic label 12 from the label strip 10 to provide a visual indication that the separated electronic label 12 is in the active state and capable of detecting events. The status indicator(s) 22 may also provide a visual indication relating to the status of the power source 14, e.g. the charge remaining in the battery, for example by adopting different colours according to the remaining charge.

The electronic labels 12 are adapted to store and/or transmit and/or receive data, for example relating to one or more events detected by the sensor 18. The storage and/or transmission and/or receipt of data may be effected by the electronic control circuitry 16, for example using communication protocols such as Bluetooth (trade mark) or near-field communication (NFC), or by a transceiver.

The electronic labels 12 include a push button 24 which can be depressed by a user for testing purposes. For example, when the push button 24 is depressed, the electronic control circuitry 16 may determine the level of charge within the battery and may provide a visual indication of the level of charge to the user by controlling the illumination of the status indicator(s) 22.

Although exemplary embodiments have been described in the preceding paragraphs, it should be understood that various modifications may be made to those embodiments without departing from the scope of the appended claims. Thus, the breadth and scope of the claims should not be limited to the above-described exemplary embodiments.

Any combination of the above-described features in all possible variations thereof is encompassed by the present disclosure unless otherwise indicated herein or otherwise clearly contradicted by context.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. A label strip (10) comprising a plurality of electronic labels (12) each comprising a power source (14), electronic control circuitry (16), and a sensor (18) controllable by the electronic control circuitry (16), wherein each electronic label (12) is separable from the label strip (10) and the sensor (18) is inactive prior to separation of an electronic label from the label strip.

2. A label strip according to claim 1, wherein the electronic control circuitry (16) is adapted to maintain the sensor (18) in an inactive state prior to separation of an electronic label from the label strip.

3. A label strip according to claim 1 or claim 2, wherein the electronic control circuitry (16) is adapted to activate the sensor (18) upon, or following, separation of an electronic label from the label strip.

4. A label strip according to claim 3, wherein the electronic control circuitry (16) is adapted to activate the sensor (18) by permitting power to be supplied from the power source (14) to the sensor (18).

5. A label strip according to any preceding claim, wherein each electronic label (12) is in electrical continuity with at least one adjacent electronic label (12) prior to separation of the electronic label from the label strip.

6. A label strip according to claim 5, wherein the electrical continuity is provided by an electrical connection between the electronic control circuitry (16) of adjacent electronic labels (12), preferably wherein the electrical connection is provided by an electrically conductive strip (20).

7. A label strip according to claim 5 or claim 6, wherein the electrical continuity is adapted to maintain the electronic control circuitry (16) in an inactive state.

8. A label strip according to claim 5 or claim 6, wherein the electronic control circuitry (16) is adapted to periodically determine the status of the electrical continuity with an adjacent electronic label (12).

9. A label strip according to any of claims 1 to 4, wherein the electronic control circuitry (16) is adapted to activate the sensor (18) in response to a change in an electrical characteristic between adjacent electronic labels (12) above a predetermined threshold occurring upon separation of an electronic label from the label strip, preferably wherein the change in the electrical characteristic is a change in capacitance, resistance or inductance.

10. A label strip according to claim 9, wherein the electronic control circuitry (16) is adapted to detect the change in the electrical characteristic upon separation of an electronic label from the label strip.

11. A label strip according to claim 9, wherein the electronic control circuitry (16) is adapted to detect the change in the electrical characteristic following separation of an electronic label from the label strip.

12. A label strip according to claim 11, wherein the electronic control circuitry (16) is adapted to periodically determine any change in the electrical characteristic above the predetermined threshold.

13. A method for activating an electronic label (12), the method comprising separating an electronic label (12) from a label strip (10) comprising a plurality of electronic labels (12) each comprising a power source (14), electronic control circuitry (16) and a sensor (18) controllable by the electronic control circuitry (16), wherein separation of an electronic label (12) from the label strip (10) permits activation of the sensor (18) by the control circuitry (16).

14. A method according to claim 13, wherein separation of the electronic label (12) from the label strip (10) breaks an electrical continuity with an adjacent electronic label and activation of the sensor (18) by the electronic control circuitry (16) occurs in response to the break in the electrical continuity.

15. A method according to claim 13, wherein separation of the electronic label (12) from the label strip (10) causes a change in an electrical characteristic between the separated electronic label and an adjacent electronic label and activation of the sensor (18) by the electronic control circuitry (16) occurs in response to a detected change in the electrical characteristic above a predetermined threshold.
